# EUROPEAN PATENT APPLICATION

(11) **EP 1 705 114 A1**
(43) Date of publication of application: **27.09.2006**
(21) Application number: 05075690.7
(22) Date of filing: 23.03.2005
(51) Int. Cl.: B64C 27/32, B64C 33/00

(54) **Helicopter rotor drive with reduced reaction torque and incorporated rotor clutch function**

(71) Applicant: Ir. A.F.Van Dijk, 2353 ms Leiderdorp (NL)
(72) Inventor: Ir. A.F.Van Dijk, 2353 ms Leiderdorp (NL)

(57) **Abstract**

The invention, the helicopter rotordrive with reduced reaction-torque and incorporated rotorclutch-function, is made in order to simplify (to lower the parts count, reduce weight, enhance the control and improve the operational efficiency of) the to-date rotorcraft. Thus the invention reduces, or even nihilizes, the reaction-torque of the rotorcraft, and simultaneously provides the mandatory rotorclutch. The invention comprises a rolling-bearing (6) that interconnects the rotormast (3) with the rotorblades (8). The rolling-bearing-innerring (6i) has been hinged to the rotormast (3) and the rolling-bearing-outerring (6j) has been connected to the rotorblades (8) such, that an offset-angle (11) between the rolling-bearing rings-plane (12) and the rotormast rotation-plane (13) can be established, such that by engine (1) power control and adjustment of said offset-angle (11), the rotorblades (8) are partly propelled by a mechanical driving-moment and partly propelled by an aerodynamic driving-moment, resulting from the forced flapping motion of the rotorblades, such that the reaction-torque is significantly reduced. The rotordrive may further comprise a second rolling-bearing (25) with one ring of said second rolling-bearing connected to the airframe; and the other ring of said second rolling-bearing connected via a link(s) (26a) with the rotorblade(s) (8) such, that said offset-angle is adjusted extra, such that extra forced flapping of said rotorblades (8) occurs and said reaction-torque is nihilized. The offset-angle (11) can be set to zero-angle during any stage of flight- and ground operation, thus functioning as rotorclutch for autorotative flight- and maintenance ground procedures.

## Description

### 1. Field of invention.

The present invention relates to a device that transmits the helicopter engine-power to the lift generating rotorblades such, that the specific reaction-torque is significantly reduced and the rotorclutch becomes obsolete: both these functions improve the previous existing machinery.

### 2. Prior Art.

The reaction-torque, fed back to the airframe by the axle-driven lifting rotor, is a common nuisance in helicopters. Of course, for a wanted normal flight, the forces influencing the flight path should be fully controlled by the pilot. To counteract the reaction-torque of the axle-driven lifting rotor, solutions have been offered; e.g. by a counteracting tailrotor, by two counterwise driven rotors mutually compensating these reaction-torques, by a sideways deflection of the engines exhaustgas-massflow causing a sufficient compensating torque; and many other solutions. However, all these solutions do not tackle the real problem: avoiding (at least some of) the reacting-torque in the first place. Nevertheless helicopters, with forced flapping rotorblades that completely nihilize the reaction-torque, have already been proposed possible. Since these so called "ornicopters" have been published in flight-technical literature by different authors, the idea of a forced flapping reaction-torqueless helicopter itself is therefore not patentable. However, the ornicopter mechanisms, which are required for obtaining a reaction-torqueless helicopter, have been invented and patents have been applied. Although being a breakthrough in the development of reaction-torqueless rotorcraft, these mechanisms are very complicated and capable of improvement (e.g. refer to the international patent application nr. PCT/NL03/00481).

In view of the general rule in aircraft design and construction "keep it save and simple", the undersigned did invent a device that significantly reduces the reaction-torque in helicopters and also functions as the rotorclutch, thus omitting the separate rotorclutch. The invention and related benefits may be utilized, with the necessary particular adaptations, in any axle-driven rotorcraft: e.g. with teeterrotor, tandemrotor, rigid- or hingeless rotor, articulated rotor, NOTAR-helicopter etc.; and may also be used in the proposed future ornicopter.

When used in the today reaction-torque helicopters, the invention will significantly reduce the reaction-torque and consequently this will save construction weight of the reaction-torque compensating provisions; the invention will also render the usual rotorclutch obsolete and consequently this will save the weight of such a separate device.

When used in the proposed future reaction-torqueless helicopters (ornicopters), the invention will significantly reduce the reaction-torque, this will save weight of the provisions that nihilize the remaining part of this already reduced reaction-torque; and this invention will also render the usual rotorclutch obsolete, this will save the weight of such a separate device.

Hence, in whatever rotorcraft used, this invention will save specific construction weight and will thus improve the overall operating efficiency of that rotorcraft. Although numerous patents have been granted that relate to devices that drive the helicopter rotor and function as the helicopter rotorclutch, only a small number of patent applications exists that relate to devices that nihilize the reaction-torque, but NO patent application covers the present invention: a helicopter rotordrive that simultaneously combines BOTH the rotorblades rotating- and forced flapping motion such, that the specific reaction-torque of the axle-driven helicopter rotor is significantly reduced, AND the mandatory helicopter rotorclutch-function, as required for the autoflight.

### SUMMARY OF THE INVENTION

First: the invention will be summarized in its principle, as a reaction-torque reducing rotordrive that also functions as the mandatory rotorclutch. The invention comprises at least one rolling-bearing with an outer- and an innerring. The innernng of such a rolling-bearing has been hinged to the rotormast such, that the plane of the inner- and outerring of this rollingbearing can be angular offset from the rotormast rotation-plane. During rotation start-up of the rotormast, the rollingbearing-innerring, being angular offset, must follow the rotormast, thus making a swinging and rotating motion in space. The outerring of such rolling-bearing is, as a result of inertia- and contact-forces, also swinging and rotating, but its rotational speed will lag behind the rotational speed of the innerring. A number (one or more) of rotorblades has been connected to the rolling-bearing-outerring such, that these rotorblades will follow the special and lagging-behind rotating motion of the rolling-bearing. The chosen offset-angle, combined with the difference between the rotational speeds of the rolling-bearing-inner- and -outerring, forces the rotorblades to flap up-and downwards. The frequency of this flapping motion-cycle is equal to the frequency-difference of the rolling-bearing-rings rotation-cycles . The amplitude of this forced flapping depends on the offset-angle. The combination of forced flapping and rotation of the rotorblades generates an aerodynamic "birdlike" propulsion; this aerodynamic propulsion increases when the air-massflow, accelerated by the flapping and rotating rotorblades, is increased. The aerodynamic propulsion is small during startup of the rotor, at that instant the rotorblades are flapping but not yet rotating. After the rotorblades rotational speed increases, the flapping frequency decreases but the air-massflow passing the airfoils of the rotorblades increases; as a result of this combined behaviour the aerodynamic propulsion gradually increases. However, with increasing rotational speed of the rotorblades the frequency of the forced flapping will decrease and the aerodynamic propulsion will reach a maximum. Further rotational acceleration reduces the aerodynamic propulsion; and if the rotorblades rotate as fast as the rotormast, there will be neighter flapping nor aerodynamic propulsion.

The rotating rotorblades also encounter an aerodynamic drag that will increase with increasing rotorblades rotational speed. A stable equilibrium is established when the rotorblades-drag is equal to the sum of the mechanical- and aerodynamic propulsion of the rotorblades.

Nature law dictates that the natural flapping frequency of the rotorblades is identical to the rotationcycle-frequency of the rotorblades; hence there exists a preferred rotationcycle-frequency for the rotormast: double the rotationcycle-frequency of the rotorblades. In order to run with minimum inertia forces, the invention must maintain this "double rotationspeed"-configuration which allows the rotorblades to flap in the natural flapping frequency.

However, such a "double rotationspeed"-configuration is not absolutely necessary, because forced rotorblade-flapping in other frequencies is also possible and may have other advantages, e.g. may reduce the specific reaction-torque of the axle-driven rotorblades even more.

The aerodynamic drag is, as usual in any helicopter, amongst others depending on the collective- and cyclic pitch of the rotorblades. The aerodynamic "birdlike" propulsion of the rotorblades is amongst others depending on the flapping amplitude of the rotorblades. The engine power- and the offset-angle of the rolling-bearing-rings should be adjusted such, that the arbitrary rotationspeed-configuration of both the rotorblades- and rotormast-rotational speed is established and maintainted. Therefore, a provision is required that automatically takes care of maintaining this arbitrary rotationspeed-configuration. This provision can be mechanical, electrical, electronic, hydraulic, pneumatic etc. or any combination of the same. One option is an electronic-hydraulic rotorblades speed governor that automatically adjusts the offset-angle to the required value, combined with an electronic-mechanical engine speed governor that automatically adjusts the engine power to the required value, both such, that this combined control system (with adequate control-signal damping) establishes and maintains the arbitrary chosen rotationspeed-configuration.

If the rotationspeed-configuration is chosen such that the rotorblades are forced to flap in the natural frequency, the rotormast rotational speed is to be maintained at double the rotorblades rotational speed; a control system is required that automatically adjusts and maintains both the required engine power and the required offset-angle such, that this "double rotationspeed"-conguration is established and maintained. The rotorblades will then flap with minimum inertia forces and the reaction-torque will be reduced by nearly 50 percent.

In case of loss of rotormast driving-moment, the rotormast rotational speed and the rotorblades rotational speed will decrease rapidly, both rotational speeds are sensed and at a "disengage trigger value" of at least one of the rates of changes, the offset-angle is set at zero angle by an automatic control system, bringing the rolling-bearing-rings plane in line with the rotation plane of the rotormast, resulting in freewheeling rotorblades.

The invention incorporates both the "reaction-torque reducing function" as well as the mandatory "rotorclutch function", such a combined feature is NOT found in any presently known helicopter rotordrive.

If the rotationspeed-configuration is chosen such, that the rotormast rotational speed is more than double the rotorblades rotational speed, the required control system will automatically adjust and maintain the required engine power and offset-angle such, that this wanted higher rotationspeed-configuration is established and maintained. The rotorblades will then flap with a higher than the natural flapping frequency, with extra inertia forces, and the reaction-torque will then be reduced by more than half of the aerodynamic drag-torque of the rotorblades. However, this rotationspeed-configuration is accompanied by extra inerta forces which require stronger and heavier rotor parts and rotor mechanisms.

Second: it is here summarized that the invention may be utilized as an omicopter-mechanism. If so, the "double rotationspeed"-conguration must then be established and maintained by a dedicated mechanism i.s.o. an automatic control system. The bisected reaction-torque, resulting from the present invention, must then further be reduced and eventually nihilized.

Conclusive remark on both utilizations: -in whatever rotorcraft used (with a rigid or hingeless rotor, a fully articulated rotor, teetering rotor or proposed future ornicopter rotor) this invention, with the necessary adaptations for the chosen type of rotor, will significantly reduce the specific reaction-torque and will omit the separate rotorclutch, thus saving construction weight and significantly improving the safety and overall operating efficiency of that rotorcraft.

For ease of understanding, the following detailed description starts with the explanation and the working of the invented rotordrive, in an embodiment comprising a single and hingeless rotorblade in a rigid rotor. Thereafter, the following detailed description continues with the explanation and the working of the invented rotordrive, in an embodiment comprising a triple-rotorblade gimballed-hub helicopter rotor, equipped with a ornicopter-mechanism that will nihilize the remaining bisected reaction-torque resulting from the invention.

### BRIEF DESCRIPTION OF THE DRAWINGS.

Fig. 1 shows a partial cross section of preferred embodiment 1 in accordance with the invention.
Fig. 2 shows a side elevation of preferred embodiment 1 in accordance with the invention.
Fig. 3 shows the geometrics of a preferred embodiment 1 in accordance with the invention.
Fig. 4 shows a partial cross section of preferred embodiment 2 in accordance with the invention.
Fig. 5 shows a side elevation of preferred embodiment 2 in accordance with the invention.
Fig. 6 shows the geometrics of a preferred embodiment 2 in accordance with the invention.

### DETAILED DESCRIPTION.

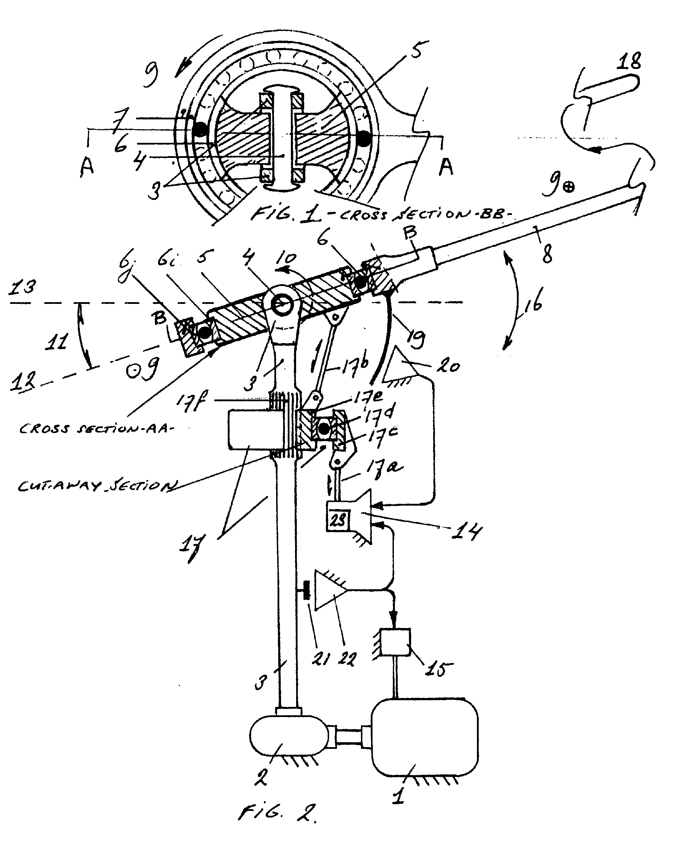

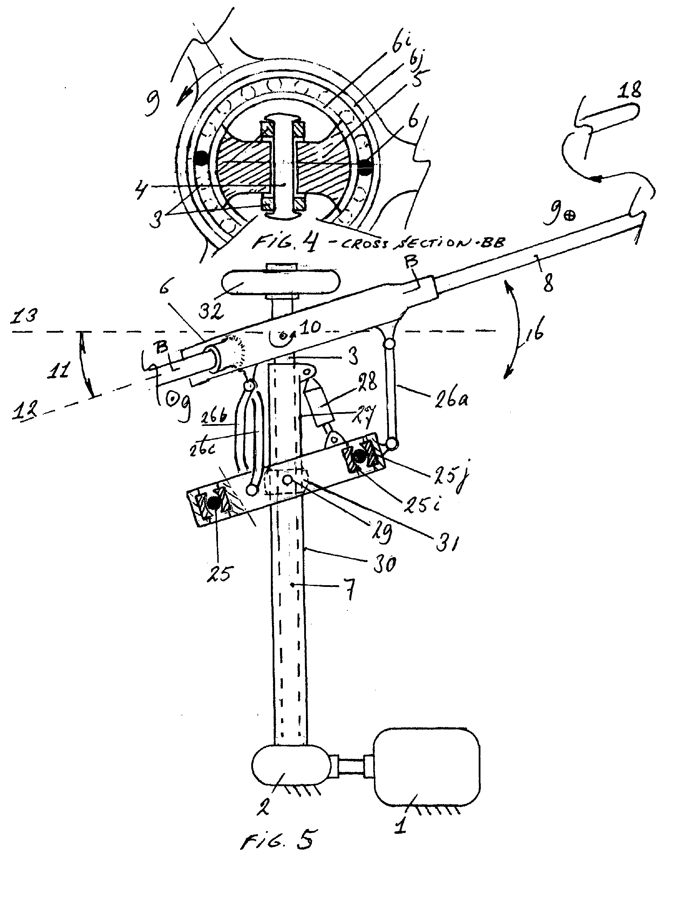

The detailed description and drawings explain the invention used in two preferred embodiments:
1. as a reaction-torque bisecting device that also functions as a rotorclutch,
2. as a reaction-torque nihilizing device that also functions as a rotorclutch.
addendum 1. This part of the detailed description and drawings explain the invention, used in a selected embodiment, comprising a single hingeless rotorblade in a rigid rotor, with a rotationspeed-configuration in which the rotorblade is forced to flap in the natural flapping frequency. Refer now to fig. 1 and 2, which are overall drawings of a preferred embodiment of the invention. Shown is the specific reaction-torque reducing rotordrive that transmits the driving power from the rotormast 3 to at least one rotorblade 8, comprising a rolling-bearing 6, a yoke 5 and an offset-hinge 4, said rolling-bearing interconnects said rotormast with said rotorblade such, that the outerring 6j of said rolling-bearing has been connected to said rotorblade, and the innerring 6i of said rolling-bearing has, via said yoke, been hinged to said rotormast such, that an offset-angle 11 between the plane 12 of said rolling-bearing-inner- and -outerring and the plane 13 of rotation of said rotormast can be adjusted such, that rotation of said rotormast will cause said rolling-bearing-inner- and -outerring to make a swinging motion in space such, that said swinging motion results in a combined rotation and up/downwards flapping motion of said rotorblade such, that aerodynamic rotorblade-forces are generated that aid in propelling said rotorblade in forward rotation such, that the specific reaction-torque is significant reduced.

Output-power from engine 1 is, by means of an interconnection via optional gearbox 2, transmitted to said rotormast. Said output-power is further transmitted via said offset-hinge and said yoke to said rolling-bearing-innerring. Said offset-hinge, interconnecting said yoke with said rotormast, gives said yoke an one-degree-of-freedom more than said rotormast, which allows an adjustment of offset-angle 11 between said plane of the rolling-bearing-rings and said plane of the rotormast rotation. As a result, said rolling-bearing-rings plane makes a tilting/rotating motion in space. Said rolling-bearing-outerring is taken along in this movement, but its rotational speed lags behind the rotational speed of said rolling-bearing-innerring, resulting in a combined rotation- 9 and up/downwards flapping- 16 motion of said rotorblade. As a result of said motion, a "birdlike" aerodynamic driving-moment is generated that assists in the propulsion of said rotorblade. Resulting from both the mechanical- and aerodynamic driving-moments in relation with the aerodynamic dragmoment, said rotorblade is accelerated in forward rotation 9.

Said specific reaction-torque reducing rotordrive has been extended with a control system, comprising a function that automatically adjusts said offset-angle and said engine power such, that a chosen combination of the rotorblade rotational speed and the rotormast rotational speed is established and maintained. Said control system consists of two speed governors: a rotorblade rotational speed governor 14 and a rotormast rotational speed governor 15. Said rotorblade rotational speed governor picks up the rotational speed value of the rotorblade by means of an electronic proximity switch sensor 20 which senses the cyclic passages of a proximity switch target 19 that follows the rotation of said rotorblade. Both said rotorblade rotational speed governor and said rotormast rotational speed governor pick up the rotormast rotational speed value, by means of an electronic proximity switch sensor 22 which senses the cyclic passages of proximity switch target 21 connected to said rotormast. Said rotorblade speed control system adjusts said offset-angle (by means of a linkage/bearing/keyed-sleeve system 17 in which link 17a is not rotating and is following the control movement given by said rotorblade speed governor, said control movement is further transmitted via the not-rotating rollingbearing-housing 17c, via the rollerbearing 17d to the sleeve 17e that is forced to rotate by means of the keys 17f on said rotormast, and via the connection with rotating link 17b to said yoke) such, that the rotational speed of the rotorblade is maintained at the design operating rotational speed of said rotorblade. Said engine rotational speed governor adjusts said engine power such, that said rotormast rotational speed is maintained at double the design operating rotational speed of said rotorblade. Hence, rotorblade-tip 18 moves in an in-space-stationairy plane that has an angle with the plane of the rotormast-rotation equal to said offset-angle. This arbitrary chosen "double" rotationspeed-configuration in the preferred embodiment makes that the specific rotormast driving-torque is bisected; consequently, the reaction-torque on the airframe is also bisected.

The specific reaction-torque reducing rotordrive has been extended with an automatic disengage clutchfunction such, that in case of insufficient rotormast driving-torque said offset-angle is automatically nihilized, resulting in a freewheeling condition of said rotorblade ready for autorotation. When at least one of the rates of changes of said rotational speeds of rotorblade and rotormast decrease significantly, the automatic disengage function 23, incorporated within said rotorblade speed governor, will command said linkage/bearing/keyed-sleeve system such, that said offset-angle is brought to zero angle, resulting in a disengaged, freewheeling rotorblade.
addendum 2. This part of the detailed description and drawings explain the invention, used in a selected embodiment comprising a triple-rotorblade gimballed-hub rotor, in the "double rotationspeed"-configuration when the rotorblades are forced to flap in their natural flapping frequency such, that the bisected reaction-torque is completely nihilized. In this second preferred embodiment, said single rolling-bearing of preferred embodiment 1 will not be able to transmit the extra energy that is required for the extra forced flapping, therefore a dedicated mechanical flapping mechanism is needed in order to nihilize the already bisected reaction-torque.

Refer now to fig. 4 and 5, which are overall drawings of said second preferred embodiment of the invention. Shown is said specific reaction-torque reducing rotordrive, that transmits the driving power from the upper-rotormast 3 to the rotorblades 8, comprising upper rolling-bearing 6, yoke 5 and offset-hinge 4. Said upper rolling-bearing interconnects said rotormast with said rotorblades such, that the outerring 6j of said upper rolling-bearing has been connected to said rotorblades and the innerring 6i of said upper rolling-bearing has, via said yoke, been hinged to said rotormast such, that an offset-angle 11 between the plane 12 of said upper rolling-bearing inner- and -outerring and the rotationplane 13 of said rotormast can be adjusted such, that rotation of said rotormast will cause said upper rolling-bearing-inner- and -outerring to make a swinging motion in space such, that said swinging motion results in a combined rotation and up/downwards flapping motion of said rotorblades such, that aerodynamic forces are generated that aid in propelling said rotorblades in forward rotation such, that said reaction-torque is significant reduced. In this second preferred embodiment, said offset-angle is adjusted by flapping links 26a, 26b and 26c that interconnect said rotorblades with the outerring 25j of lower rolling-bearing 25; while the innerring 25i of said lower rolling-bearing has been hinged to the airframe such, that an offset-angle between the rotormast-rotationplane and the plane of said lower rolling-bearing-rings can be adjusted by means of the yaw-control actuator 28.

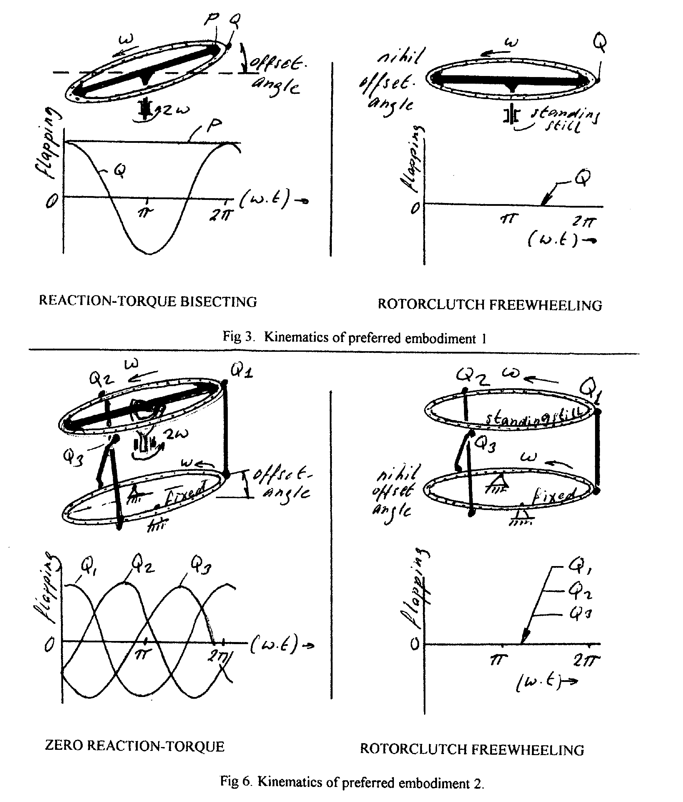

Refer to fig. 6 for a view of the kinematics of said rotorblades, said upper- and lower rolling-bearings, said linkage, said gimbals/universal joint etc. Note the crosswise coupled flapping-links 26b and 26c, the directly coupled link 26a and both said upper- and lower rolling-bearing-outerrings, all working together such, that the rotorblades are forced to rotate with half of the rotormast-rotational speed and the rotorblades-tips are forced to flap in different planes (with an one-third revolution phase-difference), whilst the rotorblades remain in one plane.

Now that said dedicated mechanism for the forced flapping has been shown, the detailed description of the second preferred embodiment can be completed.

Output-power from engine 1 is transmitted, via optional gearbox 2 and lower rotormast 7, to said upper-rotormast. Said output-power is further transmitted via said offset-hinge and said yoke to said upper rolling-bearing-innerring. Said offset-hinge, interconnecting said yoke with said upper rotormast, gives said yoke one extra degree-of-freedom 10 in relation with said upper rotormast, which allows the pilot to change said offset-angle 11 by means of said flapping links, said lower rolling-bearing and said yaw-control actuator. As a result, said plane of said upper rolling-bearing-rings will make a tilting motion in space whenever said upper-rotormast rotates. Said upper rolling-bearing-outerring is taken along in said tilting motion, but its rotational speed will lag behind the rotational speed of said upper rolling-bearing-innerring due to the fact that said linkage 26 (26a, 26b and 26c) must follow the constrained motion of said lower rolling-bearing-outerring, which rotates in a rotationplane that has a deliberately adjusted offset-angle. This constrained motion forces the rotorblades to rotate with a rotationspeed that equals half of said upper-rotormast rotational speed, resulting in a combined rotation- 9 and up/downwards flapping motion 16 of said rotorblades. As a result of said combined rotation- and flapping motion, a "birdlike" aerodynamic reaction is generated that assists in the propelling of said rotorblades. Resulting from the aerodynamic- and mechanical driving-moments, said rotorblades are propelled in said rotation. As a consequence of said "double rotationspeed"-configuration of said upper-rotormast rotational speed, the reaction-torque is bisected. Furthermore, the dedicated flapping mechanism maintains said "double rotationspeed"-configuration and simultaneously increases the flapping amplitude such, that the already bisected reaction-torque is eventually nihilized.

The specific reaction-torque reducing rotordrive combined with the reaction-torque nihilizing flapping mechanism also incorporates the rotor-clutchfunction. In case of insufficient rotormast driving-torque, said offset-angle is set at zero-angle by the pilot flying utilizing said yaw-actuator that displaces said flapping links, resulting in a disengaged and freewheeling condition of said rotorblades, as required for the autorotative flight.

In order to separate the forced propulsive flapping motion from the free flapping motion of the rotorblades during flight, the rotormast is devided in said upper- and said lower rotormast, both parts being interconnected by universal-joint 29. Also the rotormast-tube has been divided in an upper- 27 and a lower 30 part and are interconnected by means of gimbals 31 such, that said upper-rotormast-tube part will follow the universal hinge-action of said upper rotormast. Both said yaw-actuator and said innernng of said lower rolling-bearing have been connected to said upper rotormast with a one-degree of freedom hinge such, that it is made possible for said yaw-actuator to extend and change said adjusted offset-angle, without being influenced by hinge-action of said gimbals. In this way an important property of this second preferred embodiment is realized: -the forced flapping motion of said rotorblades is independent of the free flight flapping motion of said rotorblades.

The forced flapping motion of the three rotorblades causes a resultant lifting force that, although having a cycle-average vector lined up with the upper-rotormast centerline, produces off-centerline momentary force-components that cause moments around the pitch- and roll-axis. In order to prevent that said momentary moments are transmitted to the airframe, a so called gyrostatic damper 32 (flywheel) has been connected to said upper rotormast. The rotormast rotational speed, combined with adequate polar inertia moment of said gyrostatic damper, creates sufficient gyroscopic- and inertia damping action in order to support the forced flapping moments whilst leaving the free gimballed character of said rotorblades intact. Also the periodical torsional rotor-vibrations around the z-axis will be appreciable damped by said gyrostatic damper.

Note in this second preferred embodiment: the "double rotational speed" configuration of the rotormast is not established by a control mechanism, but by a dedicated forcing mechanism comprising said lower rolling-bearing and said related linkage. Said offset-angle of said upper rolling-bearing in this second preferred embodiment is obtained by adjustment of said lower rolling-bearing and transmitted by links 26a, 26b and 26c to the upper rolling-bearing. Adequate adjustment of said offset-angle results in forced flapping of said rotorblades with such amplitude, that said reaction-torque is nihilized. However, with over- or under-setting of this required offset-angle, the pilot has full yaw-control authority over the rotorcraft; and is also capable of adjusting said offset-angle to zero angle in order to make the autorotative flight possible.

The foregoing desciption of the two preferred embodiments leaves out the usual cyclic-and collective rotorblade pitch control system with the related mechanism, since this pitch control system, commonly used in to-day helicopters, is selfexplanatory.

The foregoing description of the two preferred embodiments of the invention has been presented for the purposes of illustration and description. It is not intended to be exhaustive or to limit the invention to the precise forms disclosed. Many modifications and variations (e.g. multiple rotorblades in single or multi rotors for smoothing the aerodynamic- and/or inertia forces, forced flapping of the rotorblades in a non-natural frequency, or full forced flapping in a full reaction-torqueless ornicopter-rotor(s) of any combination of the same, etc.) are possible in light of the above teaching. It is intended that the scope of the invention be limited not by this detailed description, but rather by the claims appended hereto.

## Claims

1. A specific reaction-torque reducing rotordrive that transmits the driving power from the rotormast to the (at least one) rotorblades, comprising an offset-hinge, a yoke and a rolling-bearing, said rolling-bearing interconnects said rotormast with said rotorblades such, that the outerring of said rolling-bearing has been connected to said rotorblades and the innerring of said rolling-bearing has, via said yoke, been hinged to said rotormast such, that an offset-angle between the plane of said rolling-bearing-inner- and -outerring and the plane of rotation of said rotormast can be adjusted such, that rotation of said rotormast will cause said rolling-bearing-inner- and -outerring to make a tilting motion in space such, that said tilting motion results in a combined rotation and up/downwards flapping motion of said rotorblades such, that aerodynamic forces are generated by said rotorblades that aid in propelling said rotorblades in forward rotation such, that the specific reaction-torque on the airframe is significant reduced; and

2. a specific reaction-torque reducing rotordrive according to claim 1, with a control system comprising a function that automatically adjusts said offset-angle and said engine power such, that a chosen combination of the rotorblades rotational speed and the rotormast rotational speed is established and maintained; and

3. a specific reaction-torque reducing rotordrive according to claims 1 or 2, with a disengage clutchfunction such, that in case of insufficient rotormast driving-torque, said offset-angle is automatically nihilized, resulting in a freewheeling condition of said rotorblades ready for autorotation; and

4. a specific reaction-torque reducing rotordrive according to claim 1 and 3 extended with a mechanical device comprising a second rolling-bearing connected to the first said rolling-bearing by link(s) such, that extra forced flapping of said rotorblade(s) is made possible resulting in a completely nihilized reaction-torque, giving the pilot full yaw-control authority over the rotorcraft; and

5. a specific reation-torque reducing rotordrive according to claim 1, 3 and 4, extended with the important feature such, that the rotormast is devided in an upper- and a lower rotormast, both parts being interconnected by universal-joint. Also the rotormast-tube has been divided in an upper- and a lower part and are interconnected by means of gimbals such, that said upper-rotormast-tube part will follow the universal hinge-action of said upper rotormast; the mechanical device included in claim 4 has been connected to said upper rotormast with a one-degree of freedom hinge such, that said yaw-actuator can extend and change said adjusted offset-angle without being influenced by the hinge-action of said gimbals; and

6. a specific reation-torque reducing rotordrive according to claim 1, 3, 4 and 5, extended with a gyrostatic damper (flywheel) connected to said upper rotormast such, that the rotormast rotational speed, combined with adequate polar inertia moment of said gyrostatic damper, creates sufficient gyroscopic- and inertia damping action in order to support the forced flapping moments whilst leaving the free gimballed character of said rotorblades intact; and

7. a specific reaction-torque reducing rotordrive according to claims 1, 2, 3, 4 and 5 which has been extended with one or more of the many possible modifications and variations (e.g. multiple rotorblades in single or multi rotors for smoothing the aerodynamic- and/or inertia forces, rigid-, articulated or gimballed rotors, forced rotorblades flapping in non-natural frequencies, or forced flapping in full reaction-torqueless rotors, etc.).
